# EUROPÄISCHE PATENTSCHRIFT

(11) **EP 0 575 847 B1**
(45) Veröffentlichungstag und Bekanntmachung des Hinweises auf die Patenterteilung: **11.09.1996**
(21) Anmeldenummer: 93109450.2
(22) Anmeldetag: 14.06.1993
(51) Int. Cl.: C08G 63/85, C08G 63/183, C08J 11/24

(54) **Verfahren zur Herstellung von Polybutylenterephthalat aus Polyethylenterephthalat-Abfall**
Process for the production of polybutylene terephthalate from polyethylene terephthalate scrap
Procédé pour la production de polytéréphtalate de butylène à partir de déchets de polytéréphtalate d'éthylène

(30) Priorität: 23.06.1992 DE 4220473
(43) Veröffentlichungstag der Anmeldung: 29.12.1993
(73) Patentinhaber: Zimmer Aktiengesellschaft, D-60388 Frankfurt (DE)
(72) Erfinder: Kyber, Manfred, D-6457 Maintal 2 (DE); Schmidt, Wolfgang, Dr., D-6458 Rodenbach 2 (DE); Schollar, Uwe, D-6050 Offenbach (DE)

(56) Entgegenhaltungen:
- CHEMICAL ABSTRACTS, vol. 81, no. 8, 26. August 1974, Columbus, Ohio, US; abstract no. 38095v, Seite 20 ;Spalte 2 ;

## Beschreibung

Die Erfindung betrifft ein Verfahren zur Herstellung von Polybutylenterephthalat (PBT) durch Butandiolyse von Polyethylenterephthalat-Abfällen (PET-Abfällen), Umesterung des Diolysates und Polykondensation.

Bedingt durch die zunehmende Verwendung von PET-Behältern, insbesondere von PET-Getränkeflaschen, besteht ein steigender Bedarf an Verwertungsmöglichkeiten von PET-Abfällen.

Die Glykolyse von PET-Abfällen zu Oligomeren ist seit langem bekannt (GB-Patent 610136), ebenso die Polykondensation der erhaltenen Glykolysate zu PET (DE-Auslegeschrift 1151939, EP-Offenlegungsschrift 0174062). Der Markt für derartiges Recycling-PET ist jedoch begrenzt, da für Lebensmittelverpackungen nicht zugelassen und für Fasern höchster Qualität ungeeignet. Für Fasern durchschnittlicher Qualität besteht kein zusätzlicher Bedarf.

Die Fortführung des PET-Abbaus bis zu den Monomeren (US-Patente 3544622 und 5051528), deren Reinigung und erneute Polykondensation führt zwar zu Recycling-PET verbesserter Qualität, ist aber wirtschaftlich nicht tragbar.

Die Depolymerisation von PET-Abfällen mit einem vom Ethylenglykol verschiedenen Diol, wie Propandiol, Neopentylglykol (GB-Patent 1158561 und DE-Auslegeschrift 2413717) oder 1,4-Cyclohexandimethanol (US-Patent 4259478), und Polykondensation des Diolysates, meist unter Zusatz aliphatischer oder ungesättigter Polycarbonsäuren, führt zu Copolyestern mit sehr begrenzten Marktchancen.

Eine große Nachfrage besteht hingegen für PBT, sowohl für Formkörper als auch für Teppichfasern. Die Herstellung von Butylenterephthalat-Homopolymerisaten aus PET-Abfällen wäre daher sehr interessant. Der Literatur können jedoch weder Ausführungsbeispiele für die Diolyse mit 1,4-Butandiol (1,4-BD) noch für die nachfolgende Herstellung von vom PET verschiedenen Homopolymerisaten entnommen werden.

Eine unmittelbare Übertragung der für andere Diole gegebenen Parameter auf die Diolyse mit 1,4-BD scheitert an der sehr hohen Tetrahydrofuran-Bildung (über 0,5 Mol THF pro Mol PET). Die Dehydratisierung von 1,4-BD zu THF verläuft leichter als der diolytische Abbau des PET. Auch ist die quantitative Abspaltung und Entfernung des Ethylenglykols (EG) nicht ohne weiteres möglich.

Aufgabe der vorliegenden Erfindung ist somit die Herstellung von PBT mit weniger als 1,0 Gew.-% vom Ethylenglykol abgeleiteten Einheiten aus PET-Abfällen. Ferner sollte die hierbei anfallende Menge THF soweit reduziert werden, daß dieses PBT mit aus den Monomeren erhaltenem PBT wirtschaftlich konkurrenzfähig ist.

Diese Aufgabe wird erfindungsgemäß entsprechend den Angaben der Patentansprüche gelöst.

Ausgangsprodukt sind PET-Abfälle jeglicher Provenienz, insbesondere gebrauchte PET-Getränkeflaschen in Form von Mahlgut. Grundsäzlich können sowohl farblose als auch gefärbte PET-Abfälle eingesetzt werden.

Farbige Einsatzprodukte eignen sich allerdings nur zur Herstellung von PBT, welches selber dunkel eingefärbt werden soll. Je nach Farbstoff kann vereinzelt eine Beeinträchtigung des Reaktionsverlaufs auftreten, die aber durch Variieren der Katalysatormenge und/oder der Verweilzeit ausgeglichen werden kann.

Entscheidend für die wirtschaftliche Konkurrenzfähigkeit des erfindungsgemäßen Verfahrens ist neben der Qualität des hergestellten PBT die Minimierung der Tetrahydrofuran-Bildung. Diese tritt verstärkt da auf, wo freies 1,4-Butandiol höheren Temperaturen ausgesetzt ist. Reaktionsbedingungen, die die Diolyse begünstigen, erhöhen die THF-Bildung. Es mußten daher Reaktions-Parameter gefunden werden, die die Diolyse ermöglichen ohne die THF-Bildung zu beschleunigen.

Erfindungsgemäß wird dies dadurch erreicht, daß dem PET zunächst nur soviel 1,4-BD zugesetzt wird wie notwendig, um eine bei Reaktionstemperatur gut verarbeitbare Mischung zu erhalten. Für PET-Abfälle mit einer Intrinsic-Viskosität im Bereich von 0,65 bis 0,85 dl/g genügen 0,2 bis 0,5 Mol 1,4-BD pro Mol PET. Bei höherviskosem PET können höhere 1,4-BD-Mengen erforderlich sein, bis zu 1,0 Mol 1,4-BD pro Mol PET.

Des weiteren darf die Diolyse-Temperatur 250 °C, vorzugsweise 230 °C, besonders bevorzugt 225 °C nicht überschreiten. Die untere Grenze liegt bei 200 °C. Bei Unterschreiten dieser Temperatur-Grenzen ist eine ausreichende Diolyse-Geschwindigkeit nicht gegeben, bei Überschreiten steigt die THF-Bildung stark an.

Vorteilhafterweise wird in der Diolyse-Stufe nur soviel Katalysator eingesetzt wie für die Diolyse erforderlich und der für die Umesterung und Polykondensation benötigte Katalysator erst später zugesetzt. Als Katalysator werden in 1,4-BD lösliche Titanverbindungen, wie z. B. Tetraisopropyl-titanat oder Tetrabutyl-titanat, bevorzugt. Zinnverbindungen, wie z. B. n-Butylzinnhydroxidoxid oder Monobutylzinntris-(2-ethylhexanoat) können ebenfalls verwendet werden, sind aber weniger aktiv. Für die Diolyse wird eine Katalysatormenge entsprechend 10 bis 300 ppm Titan oder Zinn, vorzugsweise entsprechend 10 bis 30 ppm Titan eingesetzt.

Die sonstigen Diolyse-Parameter, d. h. Druck, eingeleitete mechanische Energie und Verweilzeit, stehen in Zusammenhang mit der verwendeten Apparatur, wobei zwischen Rührautoklaven und Extruder zu unterscheiden ist. Rührautoklaven eignen sich besonders für diskontinuierliche Fahrweise sowie für kleinere Anlagen. Die von der Investition her teureren Einschnecken-Extruder werden bei kontinuierlichem Betrieb bevorzugt.

In Rührautoklaven erfolgt die Diolyse bei mindestens 1 bar, vorzugsweise unter autogenem Druck, der bei der angegebenen 1,4-BD-Menge und Temperatur bei maximal etwa 2,5 bar liegt.

Das PET-Butandiol-Gemisch ist wegen der Limitierung der 1,4-BD-Menge sehr viskos und erlaubt daher nur geringe Rührgeschwindigkeiten von beispielsweise 10 Upm zu Beginn der Diolyse und 80 Upm am Ende der Diolyse. Die eingeleitete Energie ist gering. Verweilzeiten im Bereich von 30 bis 60 min, vorzugsweise 40 bis 50 min, sind daher für einen ausreichenden Diolyse-Grad nötig.

Bei Einschnecken-Extrudern werden Druck und eingeleitete Energie von der Schnecken-Geometrie bestimmt. Bei marktgängigen Extrudern, wie sie auch zur Einarbeitung flüssiger Additive in Polymere verwendet werden, liegen die Drücke im Bereich von 3,0 bis 25 bar, vorzugsweise bei 10 bis 20 bar. Die eingeleitete mechanische Energie ist hoch, so daß Verweilzeiten von 1 bis 20 min, vorzugsweise 1 bis 5 min ausreichen.

Bei Einhaltung der erfindungsgemäßen Parameter liegt die THF-Bildung in der Diolyse-Stufe bei maximal etwa 14 Mol-%, vorzugsweise bei maximal etwa
11 Mol-% bezogen auf PET.

Das überwiegend Ethylenterephthalat-Oligomere enthaltende Diolyse-Gemisch wird anschließend mit 1,4-Butandiol bei einer Temperatur im Bereich von 190 bis 250 °C, vorzugsweise 190 bis 230 °C und einem Druck im Bereich von 0,1 bis 1,0 bar, vorzugsweise 150 bis 300 mbar umgeestert. Die Temperatur sollte möglichst niedrig sein, d. h. gleich oder bevorzugt niedriger als in der Diolyse-Stufe, da andernfalls mehr THF entsteht.

Während der Umesterung sollte im Reaktionsgemisch stets nur wenig mehr freies 1,4-BD vorliegen als der Umesterungsrate entspricht. Die erforderliche 1,4-BD-Menge von zusätzlich 1,0 bis 3,0 Mol 1,4-BD, vorzugsweise 2,3 bis 2,7 Mol 1,4-BD pro Mol PET wird daher kontinuierlich verteilt über die gesamte Reaktionsdauer zugegeben, während gleichzeitig das abgespaltene Ethylenglykol (EG) und entstandenes Tetrahydrofuran abdestilliert wird. Bevorzugt wird die Einspeiserate des 1,4-BD proportional zu der Abdestillationsrate des EG mit fortschreitender Verweilzeit verringert.

Zusätzlicher Katalysator entsprechend 50 bis 250 ppm Titan oder Zinn, vorzugsweise entsprechend 80 bis 120 ppm Titan, wird kontinuierlich in die Umesterungsstufe, bevorzugt zusammen mit dem 1,4-BD, eingespeist.

Die Verweilzeit muß eine praktisch quantitative Umesterung der Ethylenterephthalat-Oligomere in Butylenterephthalat-Oligomere gewährleisten. Bei einer Verweilzeit im Bereich von 90 bis 180 min, vorzugsweise 130 bis 170 min, liegt der Anteil an vom Ethylenglykol abgeleiteten Einheiten im Endpolymer bei unter 1,0 Gew.-%, vorzugsweise bei unter 0,5 Gew.-%.

Im Ausgangs-PET eventuell enthaltene Diethylenglykol-Einheiten werden ebenfalls nahezu vollständig eliminiert. Ethylen-isophthalat-Einheiten, die in den PET-Abfällen zum Teil in Mengen bis zu etwa 5 % enthalten sind, werden in Butylen-isophthalat-Einheiten überführt.

Die anschließende Vorkondensation und Polykondensation erfolgen in an sich bekannter Weise. Die Vorkondensation erfolgt unter kontinuierlicher Absenkung des Druckes bis auf einen Wert im Bereich von 100 bis 10 mbar, vorzugsweise 50 bis 10 mbar und gleichzeitiger Erhöhung der Temperatur bis auf einen Wert im Bereich von 230 bis 260 °C, vorzugsweise 245 bis 255 °C sowie unter Abdestillation des überschüssigen 1,4-BD und des Reaktionswassers. Das abdestillierte 1,4-Butandiol kann, bevorzugt nach destillativer Reinigung, erneut in der Umesterungs-Stufe eingesetzt werden. Die Verweilzeit liegt bei 45 bis 90 min.

Nach Zugabe von weiterem Katalysator entsprechend 10 bis 100 ppm Titan oder Zinn, vorzugsweise 20 bis 50 ppm Titan, wird unter Beibehaltung der Temperatur der Druck bis auf maximal 1,5 mbar abgesenkt und die Polykondensation bis zum Erreichen der gewünschten Intrinsic-Viskosität von mindestens 0,90 dl/g fortgeführt. Die erforderliche Verweilzeit liegt im Bereich von 60 bis 180 min. Eine nachfolgende Polykondensation in fester Phase ist möglich.

Ausgehend von farblosen PET-Abfällen wird PBT erhalten, welches die gleichen Eigenschaften aufweist, wie aus den Monomeren hergestelltes PBT. Die insgesamt entstandene THF-Menge liegt mit maximal etwa 22 Mol-%, vorzugsweise maximal etwa 18 Mol-% bezogen auf PET zwar höher als bei der Herstellung des PBT auf Monomer-Basis, wird aber durch den Einsatz des billigen Rohstoffes PET-Abfälle kompensiert.

### Beispiele:

| Für die nachfolgenden Beispiele wurden PET-Flaschenabfälle mit folgenden Kenndaten eingesetzt: | | | |
|---|---|---|---|
| | | für Beispiel Nr. 1-5 | für Beispiel Nr. 6-10 |
| Intrinsic-Viskosität | dl/g | 0,840 | 0,756 |
| Aschegehalt | ppm | 460 | 413 |
| Diethylenglykol | Gew.-% | 1,96 | 1,27 |
| Farbe | | farblos | farblos |
| Isophthalsäure | Gew.-% | 2,8 | 0,93 |
| Antimon | ppm | 125 | 169 |
| Phosphor | ppm | 45 | 45 |
| Schmelzpunkt DSC | °C | 242,3 | 250,3 |
| Schüttgewicht | kg/l | 0,47 | 0,45 |

Die Intrinsic-Viskosität wurde an einer Lösung von 0,5 g Polymer in 100 ml eines Gemisches aus Phenol und 1,2-Dichlorbenzol (3 : 2 Gew.-Teile) bei 25 °C bestimmt.

Die anorganischen Bestandteile wurden massenspektrometrisch, die organischen Komponenten gaschromatographisch, gegebenenfalls nach Druck-Methanolyse des Polyesters, bestimmt.

### Ausführung:

In einem Edelstahl-Rührautoklaven wurden zerkleinerte PET-Flaschenabfälle, 1,4-Butandiol sowie Tetra-n-butyl-titanat oder Monobutylzinntris-(2-ethylhexanoat) als Katalysator vorgelegt und nach Verschließen des Autoklavs das Gemisch unter Rühren auf die Diolyse-Temperatur erhitzt.

Nach Abschluß der Diolyse wurde der Druck verringert und kontinuierlich 1,4-Butandiol-Katalysator-Lösung eingespeist. Gleichzeitig wurde das abgespaltene Ethylenglykol zusammen mit gebildetem THF sowie Spuren an 1,4-BD und Wasser abdestilliert. Die Zugabe der 1,4-Butandiol-Katalysator-Lösung erfolgte mit konstanter Einspeiserate, ausgenommen Beispiel Nr. 7, bei dem die Einspeiserate proportional zu der im ansonsten gleichem Beispiel Nr. 6 ermittelten Abdestillationsrate des Ethylenglykols war.

Nachdem die Ethylenglykol-Abspaltung praktisch beendet war, wurde die 1,4-BD-Katalysator-Zufuhr unterbrochen, der Druck kontinuierlich abgesenkt und die Temperatur allmählich angehoben. Gleichzeitig wurden das überschüssige 1,4-BD sowie Reaktionswasser und restliches THF abdestilliert.

Nach Abschluß der Vorkondensations-Stufe wurde zusätzlicher Katalysator, gelöst in sehr wenig 1,4-BD, zugegeben und der Druck auf weniger als 1,5 mbar eingestellt. Die Polykondensation wurde bis zum Erreichen der vorgegebenen Intrinsic-Viskosität fortgeführt. Danach wurde die Schmelze aus dem Reaktor ausgetragen und granuliert.

Bei dem Beispiel Nr. 10 wurde die Diolyse kontinuierlich in einem Einschnecken-Extruder (maximaler Durchsatz 5 kg/h) mit zwei Temperaturzonen und einer Flüssigkeitseinspeisung nach der ersten Temperaturzone durchgeführt. In der ersten Temperaturzone wurde der gemahlene PET-Flaschenabfall ohne Zusatz von 1,4-Butandiol bei 280 °C aufgeschmolzen. Unmittelbar danach erfolgte die Zuspeisung der 1,4-Butandiol-Katalysator-Lösung. Die in der Tabelle angegebene Temperatur und Verweilzeit bezieht sich auf die zweite Temperaturzone, ab 1,4-Butandiol-Einspeisung.

Die nachfolgende Umesterung, Vorkondensation und Polykondensation erfolgte ebenfalls kontinuierlich in drei hintereinander geschalteten Reaktoren. Die angegebenen Verweilzeiten sind Mittelwerte.

Die Beispiele Nr. 1 bis 3 sind Vergleichsbeispiele.

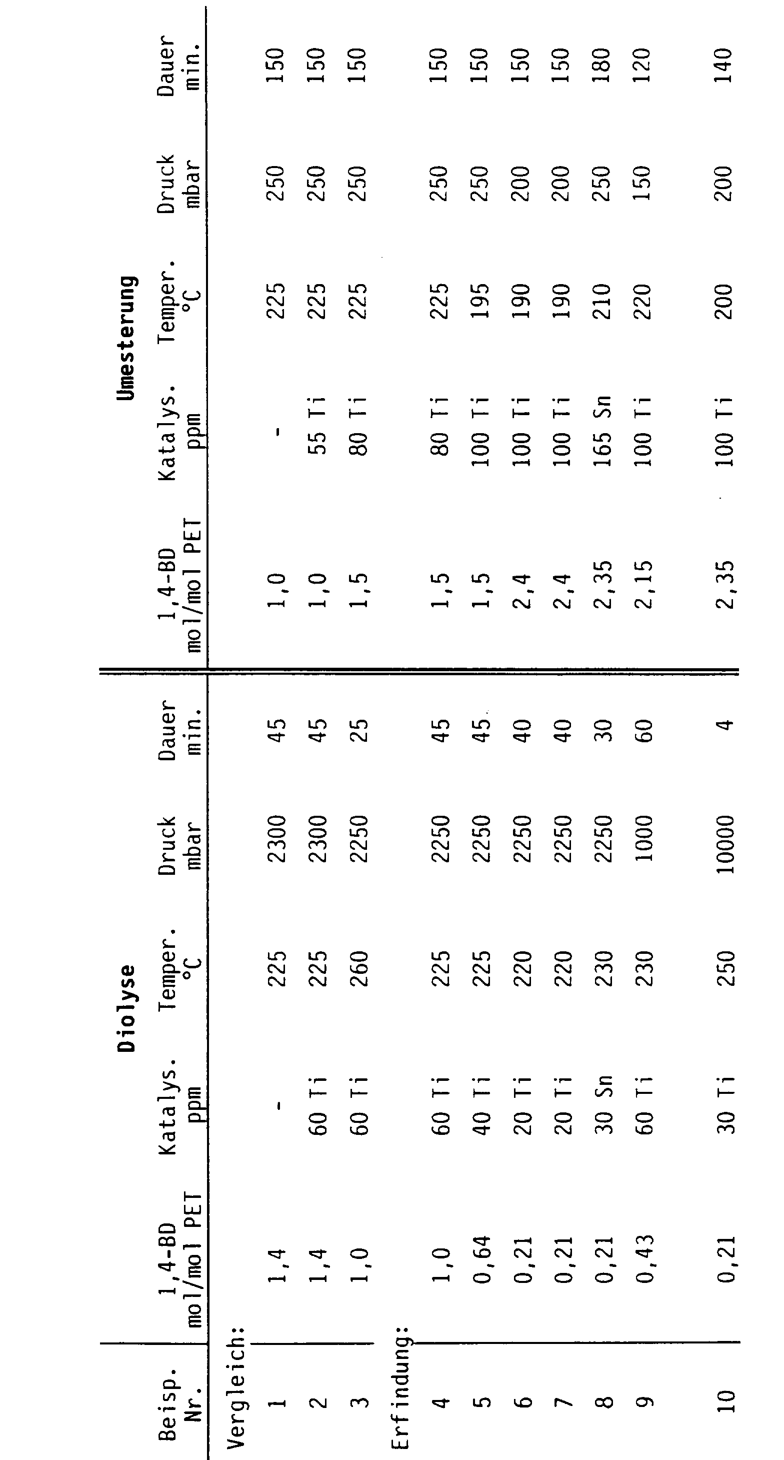

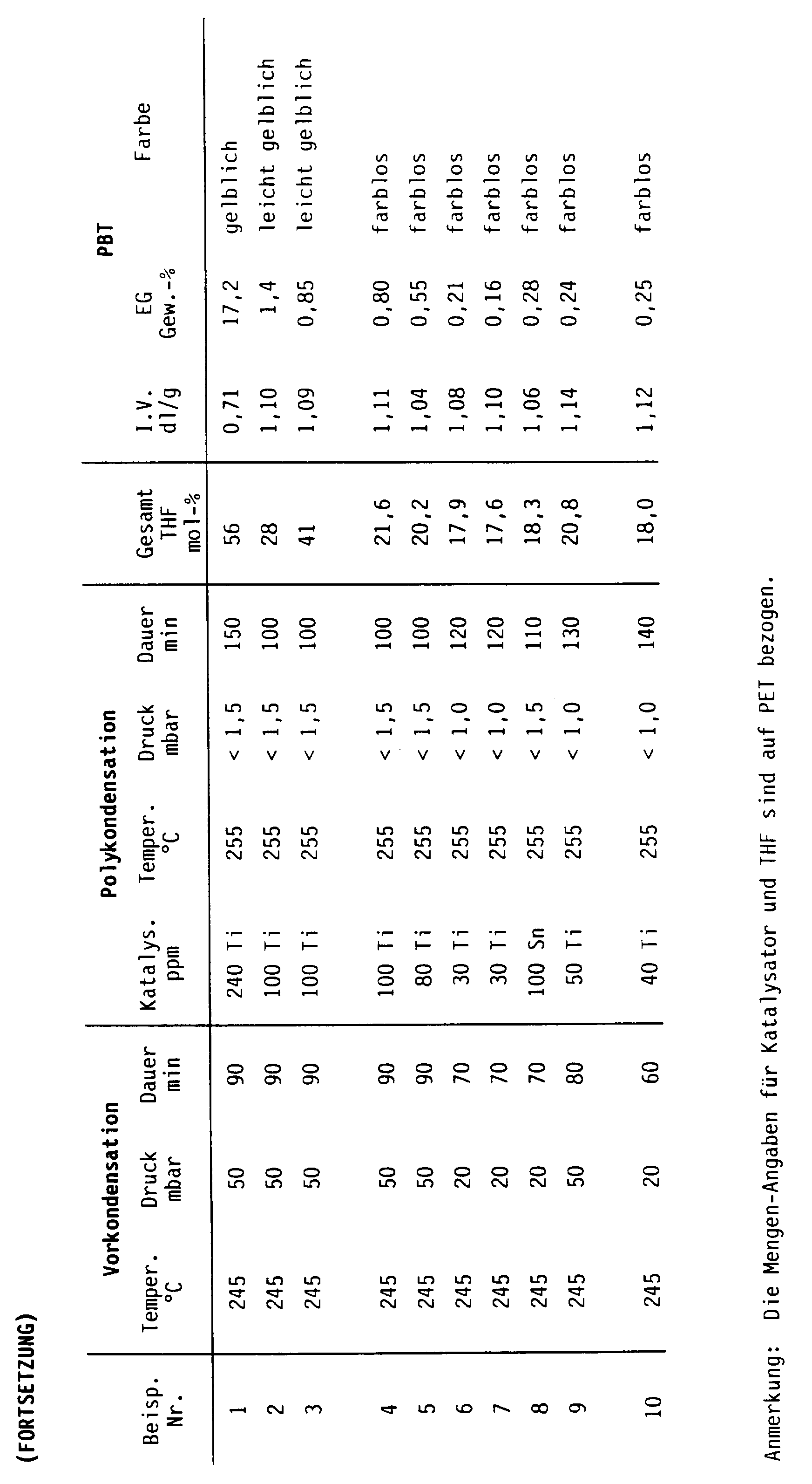

## Patentansprüche

1. Verfahren zur Herstellung von Polybutylenterephthalat mit weniger als 1,0 Gew.-% vom Ethylenglykol abgeleiteten Einheiten und einer Intrinsic-Viskosität von mindestens 0,90 dl/g aus Polyethylenterephthalat-Abfällen, dadurch gekennzeichnet, daß
a) zerkleinerte Polyethylenterephthalat-Abfälle (PET) mit 1,4-Butandiol (1,4-BD) im Verhältnis 0,2 bis 1,0 Mol 1,4-BD pro Mol PET in Gegenwart eines Katalysators entsprechend 10 bis 100 ppm Titan oder Zinn, bezogen auf PET, bei einer Temperatur im Bereich von 200 bis 250 °C unter einem Druck von mindestens 1,0 bar diolysiert werden,
b) das Diolyse-Gemisch aus Stufe a) unter kontinuierlicher Einspeisung von zusätzlichem 1,4-Butandiol im Verhältnis 1,0 bis 3,0 Mol 1,4-BD pro Mol PET und von zusätzlichem Katalysator entsprechend 50 bis 250 ppm Titan oder Zinn, bezogen auf PET, bei einer Temperatur im Bereich von 190 bis 250 °C, einem Druck im Bereich von 0,1 bis 1,0 bar und einer Verweilzeit im Bereich von 90 bis 180 min unter gleichzeitiger Abdestillation des sich bildenden Ethylenglykols und Tetrahydrofurans umgeestert wird,
c) das Umesterungs-Gemisch aus Stufe b) unter kontinuierlicher Absenkung des Druckes bis auf einen Wert im Bereich von 100 bis 10 mbar bei gleichzeitiger Erhöhung der Temperatur bis auf einen Wert im Bereich von 230 bis 260 °C bei einer Verweilzeit im Bereich von 45 bis 90 min unter gleichzeitiger Abdestillation von überschüssigem 1,4-Butandiol und von Reaktionswasser vorkondensiert wird,
d) das Vorkondensations-Gemisch aus Stufe c) nach Zugabe von zusätzlichem Katalysator entsprechend 10 bis 100 ppm Titan oder Zinn, bezogen auf PET, bei einer Temperatur im Bereich von 230 bis 260 °C und einem Druck von maximal 1,5 mbar polykondensiert wird.

2. Verfahren gemäß Anspruch 1, dadurch gekennzeichnet, daß die Diolyse der Stufe a) in einem Rührreaktor unter autogenem Druck bei einer Verweilzeit im Bereich von 30 bis 60 min erfolgt.

3. Verfahren gemäß Anspruch 1, dadurch gekennzeichnet, daß die Diolyse der Stufe a) in einem Einschnecken-Extruder bei einem Druck im Bereich von 3,0 bis 25 bar und einer Verweilzeit im Bereich von 1 bis 20 min erfolgt.

4. Verfahren gemäß Anspruch 3, dadurch gekennzeichnet, daß die Verweilzeit 1 bis 5 min beträgt.

5. Verfahren gemäß Anspruch 1, dadurch gekennzeichnet, daß in Stufe a) 0,2 bis 0,5 Mol 1,4-Butandiol pro Mol PET sowie Katalysator entsprechend 10 bis 30 ppm Titan eingesetzt werden und die Temperatur im Bereich von 220 bis 230 °C liegt,
in Stufe b) 2,3 bis 2,7 Mol 1,4-Butandiol pro Mol PET sowie Katalysator entsprechend 80 bis 120 ppm Titan eingesetzt werden, die Temperatur im Bereich von 190 bis 230 °C, der Druck im Bereich von 150 bis 300 mbar und die Verweilzeit im Bereich von 130 bis 170 min liegt,
in Stufe c) die Endtemperatur im Bereich von 245 bis 255 °C und der Enddruck im Bereich von 50 bis 10 mbar liegt,
in Stufe d) Katalysator entsprechend 20 bis 50 ppm Titan eingesetzt wird und die Temperatur im Bereich von 245 bis 255 °C liegt.

6. Verfahren gemäß Anspruch 1, dadurch gekennzeichnet, daß in Stufe b) die Einspeiserate des 1,4-Butandiols proportional zu der Abdestillationsrate des Ethylenglykols mit fortschreitender Verweilzeit verringert wird.

## Claims

1. A process for preparing polybutylene terephthalate with less than 1.0 wt.% of units derived from ethylene glycol and an intrinsic viscosity of at least 0.90 dl/g from polyethylene terephthalate waste, characterised in that
a) crushed polyethylene terephthalate waste (PET) is diolysed with 1,4-butanediol (1,4-BD) in the ratio of 0.2 to 1.0 moles of 1,4-BD per mole of PET in the presence of a catalyst corresponding to 10 to 100 ppm of titanium or tin, with respect to PET, at a temperature in the range 200 to 250°c under a pressure of at least 1.0 bar,
b) the diolysis mixture from step a) is transesterified with a continuous supply of additional 1,4-butanediol in the ratio of 1.0 to 3.0 moles of 1,4-BD per mole of PET and of additional catalyst corresponding to 50 to 250 ppm of titanium or tin, with respect to PET, at a temperature in the range 190 to 250°c, a pressure in the range 0.1 to 1.0 bar and with a residence time in the range 90 to 180 minutes, with simultaneous removal by distillation of the ethylene glycol and tetrahydrofuran being formed,
c) the transesterification mixture from step b) is pre-condensed with continuous lowering of the pressure to a value in the range 100 to 10 mbar and a simultaneous increase in temperature to a value in the range 230 to 260°c, with a residence time in the range 45 to 90 minutes, with simultaneous removal by distillation of excess 1,4-butanediol and of reaction water,
d) the pre-condensation mixture from step c) is polycondensed after the addition of additional catalyst corresponding to 10 to 100 ppm of titanium or tin, with respect to PET, at a temperature in the range 230 to 260°c and a maximum pressure of 1.5 mbar.

2. A process according to Claim 1, characterised in that the diolysis in step a) is performed in a stirred reactor under autogenous pressure with a residence time in the range 30 to 60 minutes.

3. A process according to Claim 1, characterised in that the diolysis in step a) is performed in a single-screw extruder at a pressure in the range 3.0 to 25 bar and with a residence time in the range 1 to 20 minutes.

4. A process according to Claim 3, characterised in that the residence time is 1 to 5 minutes.

5. A process according to Claim 1, characterised in that in step a) 0.2 to 0.5 moles of 1,4-butanediol per mole of PET and catalyst corresponding to 10 to 30 ppm of titanium are used and the temperature is in the range 220 to 230°C,
in step b) 2.3 to 2.7 moles of 1,4-butanediol per mole of PET and catalyst corresponding to 80 to 120 ppm of titanium are used, the temperature is in the range 190 to 230°C, the pressure is in the range 150 to 300 mbar and the residence time is in the range 130 to 170 minutes,
in step c) the final temperature is in the range 245 to 255°C and the final pressure is in the range 50 to 10 mbar,
in step d) catalyst corresponding to 20 to 50 ppm of titanium is used and the temperature is in the range 245 to 255°C.

6. A process according to Claim 1, characterised in that in step b) the rate of supply of 1,4-butanediol is reduced in proportion to the rate of removal by distillation of ethylene glycol with increasing residence times.

## Revendications

1. Procédé de préparation de polybutylènetéréphtalate ayant moins de 1,0 % en masse d'unités dérivées d'éthylèneglycol et une viscosité intrinsèque d'au moins 0,90 dl/g à partir de déchets de polyéthylènetéréphtalate, caractérisé en ce que :
a) des déchets broyés de polyéthylènetéréphtalate (PET) sont diolysés avec du butane-1,4-diol (1,4-BD) dans le rapport de 0,2 à 1,0 mol de 1,4-BD par mole de PET en présence d'un catalyseur correspondant à 10 à 100 ppm de titane ou d'étain, par rapport au PET, à une température située dans le domaine de 200 à 250°C sous une pression d'au moins 1,0 bar,
b) le mélange de diolyse de l'étape a) est transestérifié avec introduction continue de butane-1,4-diol supplémentaire dans le rapport de 1,0 à 3,0 mol de 1,4-BD par mole de PET et de catalyseur supplémentaire correspondant à 50 à 250 ppm de titane ou d'étain, par rapport au PET, à une température située dans le domaine de 190 à 250°C, une pression située dans le domaine de 0,1 à 1,0 bar et un temps de séjour situé dans le domaine de 90 à 180 min avec élimination simultanée par distillation de l'éthylèneglycol et du tétrahydrofurane qui se forment,
c) le mélange de transestérification de l'étape b) est précondensé tandis que la pression est abaissée en continu jusqu'à une valeur située dans le domaine de 100 à 10 mbar, que la température est augmentée simultanément jusqu'à une valeur située dans le domaine de 230 à 260°C pour un temps de séjour situé dans le domaine de 45 à 90 min et que le butane-1,4-diol en excès et l'eau de réaction sont éliminés simultanément par distillation,
d) le mélange de précondensation de l'étape c) est polycondensé après addition de catalyseur supplémentaire correspondant à 10 à 100 ppm de titane ou d'étain, par rapport au PET, à une température située dans le domaine de 230 à 260°C et sous une pression d'au maximum 1,5 mbar.

2. Procédé selon la revendication 1, caractérisé en ce que la diolyse de l'étape a) est réalisée dans un réacteur agité sous la pression autogène avec un temps de séjour situé dans le domaine de 30 à 60 min.

3. Procédé selon la revendication 1, caractérisé en ce que la diolyse de l'étape a) est réalisée dans une extrudeuse à une vis à une pression située dans le domaine de 3,0 à 25 bar et avec un temps de séjour situé dans le domaine de 1 à 20 min.

4. Procédé selon la revendication 3, caractérisé en ce que le temps de séjour est de 1 à 5 min.

5. Procédé selon la revendication 1, caractérisé en ce que, dans l'étape a), on utilise 0,2 à 0,5 mol de butane-1,4-diol par mole de PET et le catalyseur en une quantité correspondant à 10 à 30 ppm de titane, et la température est située dans le domaine de 220 à 230°C,
dans l'étape b) on utilise 2,3 à 2,7 mol de butane-1,4-diol par mole de PET et le catalyseur en une quantité correspondant à 80 à 120 ppm de titane, la température est située dans le domaine de 190 à 230°C, la pression est située dans le domaine de 150 à 300 mbar et le temps de séjour est situé dans le domaine de 130 à 170 min,
dans l'étape c) la température finale est située dans le domaine de 245 à 255°C et la pression finale est située dans le domaine de 50 à 10 mbar,
dans l'étape d) on utilise le catalyseur en une quantité correspondant à 20 à 50 ppm de titane et la température est située dans le domaine de 245 à 255°C.

6. Procédé selon la revendication 1, caractérisé en ce que, dans l'étape b), le taux d'introduction du butane-1,4-diol est réduit de manière proportionnelle au taux d'élimination par distillation de l'éthylèneglycol au cours de l'écoulement du temps de séjour.
